# EUROPÄISCHE PATENTANMELDUNG

(11) **EP 3 760 036 A1**
(43) Veröffentlichungstag der Anmeldung: **06.01.2021**
(21) Anmeldenummer: 20000238.4
(22) Anmeldetag: 02.07.2020
(51) Int. Cl.: A01G 3/08, A01G 23/099

(54) **AN EINER AXT, SAPPEL ODER BEIL IST EIN FÄLLHEBER ANGEORDNET, SODASS DIE AXT, SAPPEL ODER BEIL ZUM UMKEILEN ODER UMHEBELN VON BÄUMEN VERWENDET WERDEN KANN**

(30) Priorität: 05.07.2019 AT 246202019
(71) Anmelder: Steinkellner, Walter, 9463 Reichenfels (AT)
(72) Erfinder: Steinkellner, Walter, 9463 Reichenfels (AT)

(57) **Zusammenfassung**

Axt, Sappel oder Beil (11) zum Umkeilen oder Umhebeln von Bäumen mit Stiel und Kopf, mit einem am Kopf angeordneten Fällheber (1), wobei der Fällheber (1) am Kopf lösbar befestigt ist und Nuten aufweist, in welche Rippen des Kopfes eingreifen.

## Beschreibung

Die Erfindung betrifft ein Werkzeug für die Forstwirtschaft, dass eine Kombination aus einem Fällheber und einer Axt, Sappel oder Beil ist. Es besteht aus einer Stahlplatte welche auf der Rückseite einer Axt, Sappel oder Beil befestigt ist. Sie steht über den Kopf der Axt, Sappel oder Beil hervor und wird in den Sägespalt eingeschoben. Durch anheben am Stiel wird der zu fällende Baum umgehebelt. Die Verbindung dieser zwei Werkzeuge kann fest durch verschweißen, angeschmiedet oder abnehmbar durch ein Aufstecksystem ausgeführt sein. Wenn der Fällheber nicht benötigt wird kann er abgenommen werden oder auch um 180° verdreht wieder aufgesteckt werden. Somit steht die Stahlplatte in Richtung des Stieles und ist zugleich ein Schutz für den Stiel beim Einschlagen eines Fällkeiles.

Derartige Geräte sind bereits bekannt, sie haben sich auch bewährt. Von Nachteil ist jedoch, dass der Forstarbeiter zum Fällen der Bäume immer 2 separate Werkzeuge mit sich schleppen muss der ohne hin die Hände voll hat (Motorsäge, Benzinkanister, Axt, Fällheber, usw...)

Die Aufgabe der Erfindung ist es daher den Forstarbeiter zu entlasten und seine Arbeit beim Baumfällen zu erleichtern.

Das Problem wird mit dieser Erfindung gelöst, indem man mit diesem Kombinationswerkzeug große Bäume durch einschlagen von Fällkeile umkeilen kann, sowie kleine bis mittlere Bäume mit dem Fällheber umhebeln kann. Dadurch erspart sich der Forstarbeiter ein Werkzeug und vermeidet auch die Gefahr ein Werkzeug zu verlieren. Da man durch die Motorsäge bei der Arbeit nur ein zusätzliches Werkzeug mitführen kann und somit ein weiteres irgendwo hinterlassen muss. Ein weiteres Problem wird gelöst indem man bei der abnehmbaren Variante den Fällheber abnehmen kann und man hat somit eine normale Axt, Sappel oder Beil oder den Fällheber um 180° verdreht montieren kann (abstehende Stahlplatte in Richtung Stiel) und somit beim Einschlagen von Fällkeilen der Stiel geschützt ist und ein brechen des Stieles vermieden wird.

In den Zeichnungen werden die Ausführungsvarianten und ein Ausführungsbeispiel dargestellt.

Und zwar zeigen:

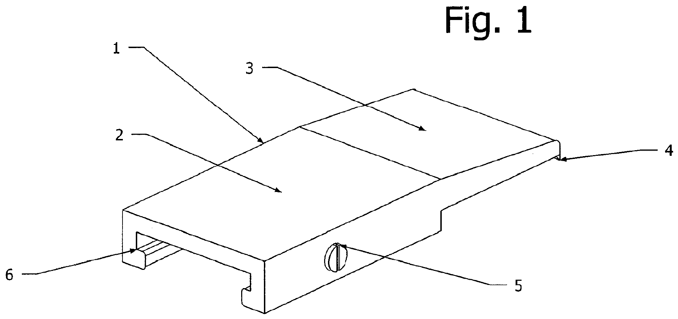

**Fig. 1****:** den Fällheber(1) zum Aufstecken auf eine Axt, Sappel oder Beil(11) bestehend aus einem Schlagrücken(2), der Spitze(3) mit Schneidkante(4), einer Sicherung(5) und dem Aufstecksystem(6).

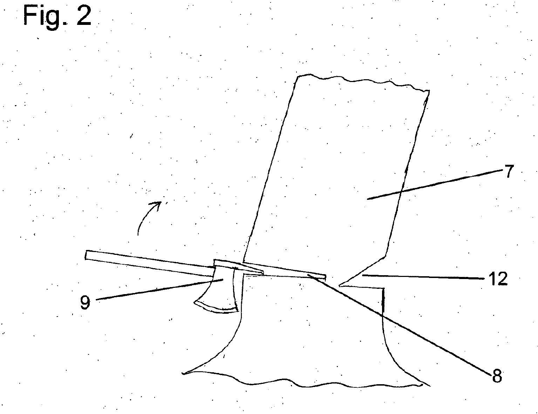

**Fig. 2****:** ein Ausführungsbeispiel in dem die Spitze(3) vom Fällheber(1) in den Sägespalt(8) vom zu fällenden Baum(7) geschoben wird. Beim Anheben am Stiel(10) krallt sich die Schneidkante(4) in das Holz und es wird ein ausrutschen des Fällhebers(1) verhindert und der Baum(7) wird durch anheben am Stiel(10) umgehebelt.

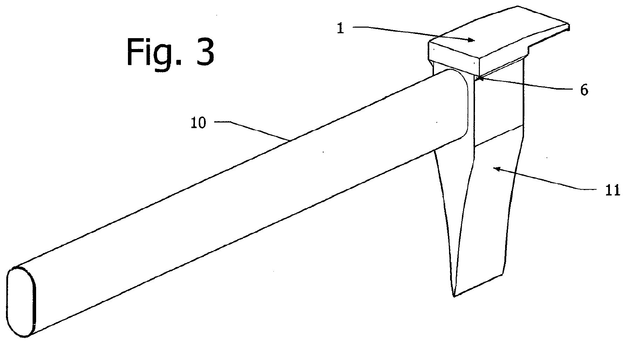

**Fig. 3****:** den Fällheber(1) an einer Axt, Sappel oder Beil(11) mit fester Verbindung z.B.: verschweißt oder angeschmiedet(6).

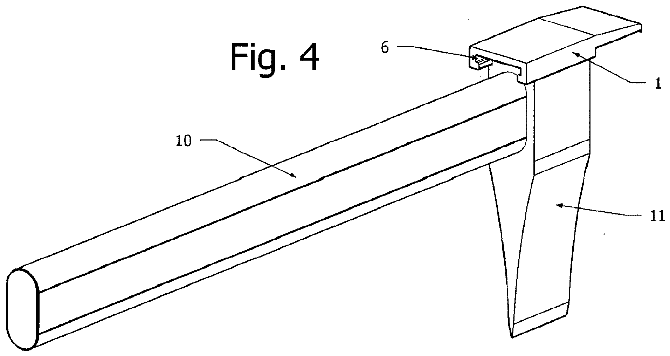

**Fig. 4****:** den Fällheber(1) an einer Axt, Sappel oder Beil(11) mit einem Aufstecksystem(6).

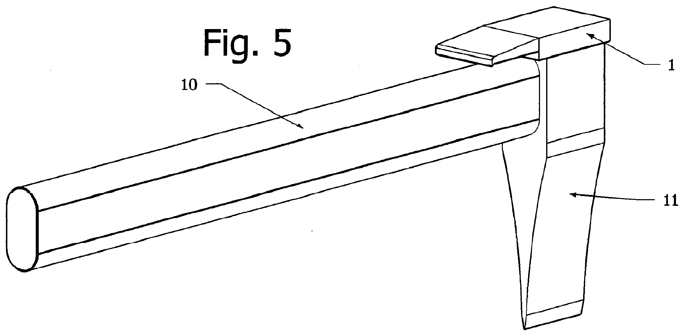

**Fig. 5****:** den Fällheber(1) um 180° verdreht montiert an einer Axt, Sappel oder Beil(11) zum Schutz des Stieles(10) beim Einschlagen von Fällkeile.

Die "Fällkombi" besteht aus einer Stahlplatte, den Schlagrücken(2) zum Einschlagen von Fällkeilen, der Spitze(3) die zum Ende hin dünner wird für leichtes einführen in den Sägeschnitt, der Schneidkante(4) gegen abrutschen, der Sicherung(5) gegen Verlust, diese kann verschieden ausgeführt werden (Schraube, Stift, Splint, Feder, usw...) und das Aufstecksystem(6) oder feste Verbindung durch schweißen oder schmieden auf eine Axt, Sappel oder Beil(11).

Beim Fällen wird zunächst ein sogenannter Fällschnitt(8) im Stamm angebracht. In diesen wird die Spitze(3) des Fällhebers(1) eingeführt. Von der anderen Seite des Stammes, der gegenüberliegenden Seite des Fällschnittes(8) wird das sogenannte Fallkerb(12) eingeschnitten, sodass in der Mitte des Stammes nur noch eine kleine Bruchleiste vorhanden ist. Durch Anheben des Stieles(10) kann dann über die Bruchstelle der Baum(7) gekippt werden.

### Bezugszeichenliste:

**1** Fällheber
**2** Schlagrücken
**3** Spitze
**4** Schneidkante
**5** Sicherung
**6** Aufstecksystem abnehmbar oder mit fester Verbindung
**7** zu fällender Baum
**8** Fällschnitt
**9** "Fällkombi" (Axt, Sappel oder Beil mit Fällheber)
**10** Stiel
**11** Axt, Sappel oder Beil
**12** Fallkerb

## Patentansprüche

1. Axt, Sappel oder Beil (11) mit Stiel und Kopf mit einem am Kopf angeordneten Fällheber (1), **dadurch gekennzeichnet dass** der Fällheber (1) am Kopf lösbar befestigt ist, wobei der Fällheber (1) Nuten aufweist, in welche Rippen des Kopfes eingreifen.

2. Axt, Sappel oder Beil nach Anspruch 1 **dadurch gekennzeichnet dass** der Fällheber (1) eine Spitze (3) mit einer Schneidkante (4) aufweist.

3. Axt, Sappel oder Beil nach Anspruch 1 oder 2 **dadurch gekennzeichnet dass** der Fällheber (1) eine Sicherung (5) aufweist.
